# EUROPEAN PATENT APPLICATION

(11) **EP 4 494 477 A1**
(43) Date of publication of application: **22.01.2025**
(21) Application number: 23186950.4
(22) Date of filing: 21.07.2023
(51) Int. Cl.: A23J 3/14, A23L 29/10, A23L 29/20, A23L 29/206, A23L 29/269

(54) **EGG SUBSTITUTE**

(71) Applicant: Lovely Day Foods GmbH, 10119 Berlin (DE)
(72) Inventor: BLANK, Imre, 1073 Savigny (CH); GREIS, Maija Aurora, 10245 Berlin (DE); GLÄSER, Peter, 12157 Berlin (DE)
(74) Representative: Richly & Ritschel Patentanwälte PartG mbB

(57) **Abstract**

Egg substitute compositions comprising pea protein and methods of manufacturing and using said compositions in the preparation of food products.

## Description

### FIELD OF THE INVENTION

The present invention is directed to egg substitute compositions and methods of manufacturing and using said compositions in the preparation of food products.

### BACKGROUND OF THE INVENTION

Eggs from chicken are one of the most widely consumed food products in the world.

Many attempts have been made to create an egg substitute that replaces the desired nutritional and culinary features of natural chicken eggs.

Eggs are a versatile source of protein, vitamins, iron amongst other nutrients. In addition to its great nutritional value, eggs are also widely used and one of the essential ingredients in a variety of culinary applications, including savory and sweet baking and cooking or simply in the form of fried or scrambled eggs.

Many attempts have been made to create an egg substitute that replaces the desired nutritional and culinary features of natural eggs by only using vegetable sources. However, none of the prior attempts was successful at providing an egg substitute that when fried in a pan provides a food with the same properties like that of a fried egg.

Accordingly, there is still-a need for an egg replacement that can replace a whole egg in its culinary and nutritional features and is of complete vegetable origin to be considered as a vegan alternative.

### SUMMARY

The invention is defined by the appended claims.

Disclosed is an egg substitute composition comprising
a. 8 - 16 % (w/w) of a protein isolate composition comprising pea protein isolate,
b. 8 - 16 % (w/w) of vegetable oil,
c. 0.5 - 2 % (w/w) of a thickener composition,
d. 0.1 - 1 % (w/w) of emulsifier,
e. 0.01-1 % (w/w) of acidity regulator,
f. at least one organic acid, and
g. the remainder being water,
wherein the pH of the composition is 5.0 - 7.0.

It was surprisingly found that the above composition in the fried state provides a structure and texture very similar to the structure and texture of chicken egg in the fried state.

The egg substitute composition can further comprise one or more colorants, especially carotenoids. The egg substitute composition can comprise 0.01% to 1% (w/w), 0.05% to 1.5% (w/w), 0.1% to 1.0% (w/w), 0.1% to 0.75% (w/w), or 0.2% to 0.5% (w/w) of one more colorant. The egg substitute composition can further comprise one or more flavoring agents, especially flavoring agents providing an egg flavor and optionally taste modifier. The egg substitute composition can comprise 0.1% to 2% (w/w), 0.2% to 1.5% (w/w), 0.3% to 1.3% (w/w), 0.4% to 1.1% (w/w), or 0.5% to 1.0% (w/w) of an egg flavor. A flavoring agent can be kala namak. A taste modifier in the meaning of the present disclosure are substances providing an umami taste (e.g. a glutamate or/and 5'-ribonucleotides) or a kokumi taste (e.g. glutathione).

The egg substitute composition can further comprise one or more salt, especially 0.1% to 2% (w/w), 0.2% to 1.5% (w/w), 0.5% to 1.1% (w/w), 0.6% to 1.0% (w/w), or 0.7% to 0.9% (w/w) salt, especially table salt (NaCl).

It was surprisingly found that salt provided at this concentration optimizes the gelling of the egg substitute and the timing of the gelling of the egg substitute when being fried.

The egg substitute composition can further comprise faba bean protein isolate.

The faba bean protein isolate and/or pea protein isolate respectively can exhibit a pH of 6.0 to 7.0.

It was surprisingly found that protein isolates having the above-defined pH further improve the gelling properties and mouthfeel of the egg substitute when being fried.

The pH of the egg substitute composition can be 5.2 to 5.6, or 5.2 to 5.5, 5.3 to 5.4.

Alternatively, the egg substitute composition exhibits a pH of 5.7 to 7.0 and comprises a preservative.

The preservative can be selected from propionic acid or its salt, sorbic acid or its salt, benzoic acid or its salt, levulinic acid or its salt, nisin, egg-based proteins that have antibacterial effects (e.g. lysozyme, ovotransferrine) or a combination thereof.

The egg substitute can comprise 0.1-0.3% (weight/weight) of propionic acid or its salt. Propionic salt can be a sodium salt of propionic acid.

The egg substitute can comprise 0.1-0.2% (weight/weight) of sorbic acid or its salt. Sorbic salt can be a sodium salt of sorbic acid.

The egg substitute can comprise 0.1-0.2% (weight/weight) of benzoic acid or its salt. Benzoic salt can be a sodium salt of benzoic acid.

The egg substitute can comprise 1-3% (weight/weight) of levulinic acid or its salt. Levulinic salt can be a sodium salt of levulinic acid.

The egg substitute can comprise 1-25 or 3-6 ppm (mg/kg) of nisin. Nisin is a polycyclic antibacterial peptide produced by the bacterium Lactococcus lactis. It has 34 amino acid residues, including the amino acids lanthionine (Lan), methyllanthionine (MeLan), didehydroalanine (Dha), and didehydroaminobutyric acid (Dhb). The preservative can be a polycyclic peptide comprising 30-40 amino acid comprising an amino acid selected from the group of lanthionine (Lan), methyllanthionine (MeLan), didehydroalanine (Dha), and didehydroaminobutyric acid (Dhb) or a combination thereof, in particular comprising each of said amino acids.

The egg substitute can comprise 100-500 ppm (mg/kg) of lysozyme.

It was found that within this pH range the texture and taste of the composition are excellent while at the same time improving shelf life and minimizing the growth of microorganisms.

The thickener composition can comprise at least two different thickeners, wherein the at least two different thickeners are capable of providing at least two different viscosities at room temperature in a solution when tested under the same conditions.

It was found that using two different thickeners further improves the gelling properties of the egg substitute. The desired viscosity can be suitably adapted.

The at least two different thickeners can be high acyl gellan and low acyl gellan.

It was found that using high acyl gellan and low acyl gellan further improves the gelling properties of the egg substitute.

In the egg substitute composition, the faba bean protein isolate can provide 0.5 - 2 % (w/w) of the egg substitute composition and/or the pea protein isolate can provide 8-14 % (w/w) of the egg substitute composition.

It has been found that those ranges optimize the properties of the egg substitute with respect to the texture and mouthfeel of the egg substitute.

The emulsifier can be an emulsifier composition comprising one, two, three, or more different emulsifiers. The emulsifier can be lecithin or an emulsifier with a similar HLB in combination with mono- and diglycerides.

A combination of two or three emulsifier can stabilize the emulsion even better than one emulsifier.

Ingredients functioning as emulsifier and thickener can also stabilize the egg substitute, such as for example methyl cellulose, modified starch, or citrus fibers.

The acidity regulator can be a salt of a short chain organic acid, e.g. sodium citrate, especially trisodiumcitrate dihydrate, which can be used in food products. A short chain organic acid in the sense of this disclosure is an organic acid having 2-6 carbons and 1 to 3 carboxyl groups.

The egg substitute composition comprises one or more organic acids in amounts suitable to adjust the pH to the desired pH value or pH value range.

The organic acid can be provided as an aqueous solution of at least organic acid. The egg substitute can comprise 1-2 % (weight/weight) of an aqueous solution comprising at least organic acid. The aqueous solution of the at least organic acid comprises 8 to 55 % (weight/weight) of an organic acid. In particular, the aqueous solution of the at least organic acid comprises 8-20 % or 8-12 % (weight/weight) of one organic acid (e.g. acid having two C atoms, e.g. acetic acid) and 20-30 % (weight/ weight) of a second organic acid (e.g. acid having 3 C atoms, e.g. lactic acid).

The organic acid can be an organic acid composition comprising 1, 2, 3 or more organic acids as defined above. The organic acid composition can comprise acetic acid, lactic acid, citric acid, succinic acid. Preferred is an organic acid composition comprising acetic acid and citric acid.

The aqueous solution can comprise acetic acid and an organic acid having 2-6 carbons, i.e. 30-50 % (w/w) aqueous acetic acid and 50-70 % (w/w) aqueous citric acid, 35-45 % (w/w) aqueous acetic acid and 55-65% (w/w) aqueous citric acid, or 40 % (w/w) aqueous acetic acid and 60 % (w/w) aqueous citric acid.

The water can be regular tap water, i.e. water that contains ions.

It was found that acidity regulators like sodium citrate improve the performance of the thickening agents.

Also disclosed is a food product comprising the egg substitute composition as described above.

Also disclosed is a method for providing an egg substitute composition comprising in sequence the following steps:
a. Dissolve an acidity regulator in water to provide a solution A
b. Dissolve a first thickener in solution A
c. Dissolve a second thickener in water to provide solution B
d. Dissolve a protein isolate composition in solution B
e. Mix solution A with solution B to provide a solution C
f. Dissolve a composition comprising vegetable oil and emulsifier in solution C
g. Dissolve salt in and add an organic acid to solution C;
h. Heating solution C obtained in step g. to a temperature of 70-75 °C and then by cooling the temperature of solution C to a desired temperature providing the egg substitute composition, the obtained egg substitute composition exhibiting a pH of 5.0 - 7.0.

Heating solution C above 75°C should be avoided to prevent gelling of the solution.

In the above method, both thickeners are dissolved separately from each other.

It was found that adding those thickeners improves the gelling of the egg substitute when being heated. In this way gelling only occurs when the egg substitute is exposed to heat and not already during manufacture of the egg substitute.

The method may further comprise a step e'. between step e. and step f., said step e'. comprising: adding one or more colorants, or/and one or more flavoring agents.

The second thickener can be capable of providing a higher viscosity in a solution than the first thickener at room temperature when tested under the same conditions.

It is also disclosed that in the method as described above, the egg substitute composition is the composition as described above.

It is also disclosed that the egg substitute composition as described above is obtainable by the method as described above.

### DETAILED DESCRIPTION

### General

As used herein the term "about" refers to ±10%, ±5%, or ±1%.

The terms "comprises", "comprising", "includes", "including", "having" and their conjugates mean "including but not limited to".

The term "consisting of means "including and limited to".

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments, and not provided in other embodiments". Any particular embodiment of the invention may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

### Protein isolate composition

The egg substitute comprises 8 - 16 % (w/w) of a protein isolate composition comprising pea protein isolate and optionally faba bean protein isolate.

In some embodiments the egg substitute comprises 8.5-15 % (w/w), 9-14 % (w/w), 9-13 % (w/w), 9-12 % (w/w), 9.5-10.5 (w/w), 10.5-11.5 % (w/w), or 11.5-12.5 % (w/w) of a protein isolate composition. Preferred are 9.5-10.5 % (w/w) of a protein isolate composition. Also preferred are 11.5-12.5 (w/w) of a protein isolate composition.

The faba bean protein isolate and pea protein isolate used for the protein isolate composition are preferably powders. The faba bean protein isolate and pea protein isolate used for the protein isolate composition can be freeze-dried or preferentially spray-dried or vacuum-dried powders. The faba bean protein isolate and pea protein isolate used for the protein isolate composition preferentially have a D90 particle size of 275 microns, to 1000 microns. The faba bean protein isolate and pea protein isolate used for the protein isolate composition are preferentially debittered to avoid unpleasant flavor.

The faba bean protein isolate and pea protein isolate used for the protein isolate composition were obtained, for example, by mild hydrolysis, preferentially with a degree of hydrolysis of less than 15%, less than 12%, or less than 10%. A degree of hydrolysis as defined above ensures a high solubility of the protein in water. The degree of hydrolysis is determined according to the method defined in US2022007678A1 at paragraphs 69-86.

The faba bean protein isolate can comprise at least 58 (w/w), 58 % (w/w) - 80 % (w/w), 58 % (w/w) - 70 % (w/w), or 59 % (w/w) - 61 % (w/w) of protein. The Faba bean protein isolate has preferentially no color (is translucent in solution) or yellow.

The pea protein bean isolate can comprise at least 82% (w/w), 82 % (w/w) - 95 % (w/w), 84 % (w/w) - 90 % (w/w), or 84 % (w/w) - 87 % (w/w) of protein. The pea protein isolate has preferentially a yellow color.

The pH of the faba bean protein isolate and pea protein isolate or any other protein isolate described herein is determined by dissolving 10 % (w/w) of the isolate in distilled water, agitating the solution until dissolution of the protein, and then determining the pH.

In some embodiments, the faba bean protein isolate and pea protein isolate described herein, have a pH in a range of about 5-7. In some embodiments, the faba bean protein isolate and pea protein isolate described herein, have a pH in a range of about 5.5-7. In some embodiments, the faba bean protein isolate and pea protein isolate described herein, have a pH in a range of about 6.0-7.0. In some embodiments, the faba bean protein isolate and pea protein isolate described herein, have a pH in a range of about 6.1-6.9. In some embodiments, the faba bean protein isolate and pea protein isolate described herein, have a pH in a range of about 6.2-6.8. In some embodiments, the faba bean protein isolate and pea protein isolate described herein, have a pH of about 6.3, 6.4, 6.5, 6.6, or 6.7.

The faba bean protein isolate can provide 0.5 - 2 % (w/w), 1.0 - 1.5 (w/w), or 1.1-1.3 (w/w) of the egg substitute composition and the pea protein isolate provides 8-14 % (w/w), 9-12 % (w/w), or 10-11.5 % (w/w) of the egg substitute composition.

### pH-range of the egg substitute

In some embodiments, the compositions described herein, have a pH in a range of about 5.2-5.9. In some embodiments, the compositions described herein, have a pH in a range of about 5.2-5.7. In some embodiments, the compositions described herein, have a pH in a range of about 5.3-5.6. In some embodiments, the compositions described herein, have a pH in a range of about 5.3-5.5. In some embodiments, the compositions described herein, have a pH of about 5.3-5.4.

### Colorants/Coloring Agents

In some embodiments, the composition comprises one or more coloring agents. Various natural or artificial coloring agents are known to those skilled in the art, and can include, for example, paprika oil, carrot concentrate, pumpkin extract, sweet potato extract, in particular, carotenoids such as beta-carotene, turmeric, annatto, vanilla yellow, mango yellow. Preferred is a vanilla yellow. The egg substitute composition can comprise one or more colorants. The egg substitute composition can comprise 0.01% to 1% (w/w), 0.05% to 1.5% (w/w), 0.1% to 1.0% (w/w), 0.1% to 0.75% (w/w), or 0.2% to 0.5% (w/w) of one more colorants, The egg substitute composition can further comprise one or more flavoring agents, especially flavoring agents providing an egg flavor and optionally taste modifier. A flavoring agent can be kala namak. A taste modifier in the meaning of the present disclosure are substances providing an umami taste (e.g. a glutamate or/and 5'-ribonucleotides) or a kokumi taste (e.g. glutathione).

Generally, the egg substitute composition can be used to replace primarily total egg, and to a certain extent also egg yolk or egg white. Depending on the desired use, appropriate colorants can be added or not added to the composition.

### Flavoring Agents

In some embodiments, the composition comprises one or more flavoring agents. In some embodiments, the composition comprises yeast, sugar, and any combination thereof. Various natural or artificial flavoring agents are known to those skilled in the art, and can include, for example, spices, sugar, sweeteners, monosodium glutamate, sulfuric flavoring agents such as black (rock) salt, or other flavoring agents. Preferred is black rock salt. Preferred are flavoring agents which are found in chicken eggs. Thus, preferred are flavoring agents which are chemically identical or similar to flavoring agents found in chicken eggs but obtained from a non-animal origin, i.e. are of vegetable origin or produced by chemical syntheses or microbiological production. In some embodiments, the composition comprises 0.1% to 2% (w/w), 0.2% to 1.5% (w/w), 0.3% to 1% (w/w), 0.3% to 0.7% (w/w), or 0.4% to 0.5% (w/w) flavoring agent.

### Salt

In some embodiments, the composition comprises 0.1% to 2% (w/w), 0.2% to 1.5% (w/w), 0.5% to 1.1% (w/w), 0.6% to 1.0% (w/w), or 0.7% to 0.9% (w/w) salt, especially table salt. The salt can be sodium chloride or potassium chloride. Preferred is sodium chloride.

### Emulsifier

In some embodiments, the composition further comprises an emulsifier from a vegetable source. In some embodiments, the emulsifier comprises lecithin, especially lecithin from a vegetable, e.g. sunflower or rapeseed. Alternatively, any emulsifier having a hydrophilic-lipophilic balance (HLB) value which is about +/- 10 % of the HLB value of lecithin may be used, such as for example mono- and diglycerides. An emulsifier can have an HLB of 2-4.

In some embodiments, the composition comprises 0.1% to 2% (w/w), 0.05% to 1% (w/w), 0.1% to 0.8% (w/w), 0.1% to 0.7% (w/w), 0.1% to 0.6% (w/w), 0.1% to 0.4% (w/w), 0.1% to 0.3% (w/w), or 0.2% (w/w), of a first emulsifier, especially lecithin. In some embodiments, the composition comprises 0.1% to 1.0% (w/w), 0.1% to 0.9% (w/w), 0.2% to 0.8% (w/w), 0.3% to 0.7% (w/w), 0.4% to 0.6% (w/w), or 0.5% (w/w) or second emulsifier, the second emulsifier preferably comprising mono- and diglycerides of fatty acids (palmitic acid, oleic acid, linoleic acid myristic acid). Preferentially, the second emulsifier are preferentially mono- and diglycerides obtained from palm oil.

### Thickener

In some embodiments, the composition comprises a thickener or mixture of components having thickening properties, such as gellan, methylcellulose, modified starch, guar gum, xanthan gum, locust bean gum, chia flour, or/and linseed flour.

In some embodiments, the composition comprises 0.2% to 1%, 1% to 2% (w/w), 1.0% to 1.8% (w/w), 1.2% to 1.6% (w/w), or 1.4% (w/w), of a thickener.

Preferred is to use a combination of at least two different thickeners wherein the at least two different thickeners are capable of providing at least two different viscosities at room temperature (depending on their concentration) in a solution when tested under the same conditions.

In some embodiments, the thickener comprises gellan gum. As used herein, "gellan gum" refers to the extracellular polysaccharide obtained by the aerobic fermentation of the microorganism *Pseudomonas elodea* in a suitable nutrient medium. Gellan gum refers to the various forms of native, deacetylated, deacetylated clarified, partially deacetylated, and partially deacetylated clarified.

Preferably the thickener comprises high acyl (HA) gellan and low acyl (LA) gellan. The low acyl gellan gum products form firm, non-elastic, brittle gels, whereas the high acyl gellan gum forms soft and elastic gels.

HA gellan gum has two acyl substituents acetate at C6 and glycerate at C2 on the first glucose unit of the repeating unit of tetrasaccharide, and on average, there is one glycerate per repeat and one acetate per every two repeats. LA gellan gum is partly deacylated or fully deacylated. Its preferred form is the fully deacylated one, with no detectable acyl groups, also called deacetylated gellan gum.

Preferably the composition comprises HA gellan gum and LA gellan gum in a ratio of 5:1 to 3:1, 4.5:1 to 3.5:1, 4.2: 1 to 3.7:1, and 4.1:1 to 3.9: 1, or 4:1. The concentration of the total gellan gum is 0.2% to 2%, 1% to 2% (w/w), 1.0% to 1.8% (w/w), 1.2% to 1.6% (w/w), or 1.4% (w/w).

Some of the thickeners may have additional techno-functional properties, such as emulsifying character, which may help stabilizing the colloidal system of the plant-based egg replacer.

### Oil

The composition preferably comprises a vegetable oil. Preferably the oil is olive oil, sunflower oil or rapeseed oil, especially rapeseed oil.

The composition can comprise 8-16 % (w/w), 8-15 % (w/w), 9-14 % (w/w), 10-13 % (w/w), or 11-12% (w/w) oil.

### Food product

In some embodiments, the present disclosure provides a food product comprising the compositions described herein. In some embodiments, the present invention provides a food product prepared using the compositions described herein. In some embodiments, the food product prepared with the compositions described herein, is almost indistinguishable from an equivalent food product prepared with eggs.

In some embodiments, the food product does not comprise any chicken egg or a portion thereof. In some embodiments, the composition and/or product do not contain material derived from animals.

In some embodiments, the food product or/and the composition are vegan.

As used herein, the term "vegan" refers to properties of the components and indicates that the components are not sourced from or derived from an animal or animal product. As such, the components that are "vegan" are free of any animal products or animal byproducts.

The compositions and food products as described herein are suitable for a vegan diet and/or a vegetarian diet. For example, in embodiments in which the composition is suitable for a vegan diet, the composition may include primarily or exclusively plant-based components such that the composition contains substantially no animal products, animal byproducts, or substantially no components derived from these animal sources.

The food products comprising the egg substitute composition may be emulsions (e.g., mayonnaise, dressing and similar colloid systems), baking mixes, cookies, muffins, cupcakes, brownies, cake, custard, pancakes, breads, waffles, pastries, pies, tarts, scones, pretzels, crackers, omelet, quiche, pasta, sauce, scrambled eggs or any type of fried or cooked egg.

### Container

Also disclosed are contains comprising the egg substitute composition.

The container can be made of a material selected from the group consisting of thin-walled film or plastic (transparent or opaque), paperboard-based, foil, rigid plastic, metal (e.g., aluminum), glass, etc.

The container may be suitable for maintaining sterility, e.g. be airtight.

The following examples illustrate the invention, but not limit the scope of the invention since the scope of the invention is defined by the claims.

### EXAMPLES

### EXAMPLE 1: MANUFACTURING PROCESS

### Tested compositions:

**Table 1**

| | Ingredients | | Example 1 |
|---|---|---|---|
| | | | %(w/w) |
| (Total) water | Water | | 71,36 |
| Protein | Pea protein | | 12.00 |
| Oil | Rapeseed oil | | 11.50 |
| Thickener | Gellan | | |
| | | High acyl gellan | 1.12 |
| | | Low acyl gellan | 0.28 |
| Acidity regulator | Sodium citrate | | 0.30 |
| emulsifier | Lecithin | | 0.20 |
| salt | Sodium chloride | | 0.80 |
| Coloring agent | Carrot concentrate | | 0.44 |
| Flavoring agent | Egg aroma | | 0.50 |
| Organic acid | Acetic acid (10 % (w/w)) | | 1.50 |
| | Total | | 100.00 |

### Manufacturing process:

To provide a total of 100 g of the egg substitute using the list of ingredients listed above the following process was used:

**Table 2**

| **Process step** | **Process step description** |
|---|---|
| | |
| Mixing A | Dissolve acidity regulator in (30% of the total) water by stirring |
| Dissolve A | Disperse LA gellan in solution A by stirring |
| Mixing B | Disperse protein in (70% of the total) water by stirring |
| Dissolve B | Disperse HA gellan in solution B by stirring |
| Mixing C | Add solution A to solution B under agitation |
| Emulsification | Add oil and lecithin under agitation, add salt under agitation, add organic acid |
| Heating | Heating emulsified product for 10 minutes at 75°C under agitation |
| Cooling | Cooling of product to 20°C |

### Testing

Heating of product in frying pan until the product starts to boil is performed. Subsequently, visual inspection of the boiled/fried product by an expert grading the product with respect to the property at issue from 1 to 10 (1: not close to control example, 10: identical to control example) is performed.

### Results

**Table 3**

| Property | Example 1 | Control example (full chicken egg) |
|---|---|---|
| Melt behaviour | 7 | 10 |
| Emulsification | 7 | 10 |
| Texture/mouthfeel | 5 | 10 |

It was found that the tested composition provides a texture and mouthfeel similar to the control example. It was also found that adding about 1.2 (w/w) faba protein can further improve the properties of the obtained composition (data not shown).

### EXAMPLE 2: EFFECT OF PH OF PROTEIN ISOLATE ON PROPERTIES OF EGG SUBSTITUTE PRODUCTS

### Tested compositions:

**Table 4**

| | Ingredients | | Example 1 | Reference example 2 | Reference example 3 | Reference example 4 |
|---|---|---|---|---|---|---|
| | | | %(w/w) | %(w/w) | %(w/w) | %(w/w) |
| (Total) water | Water | | 72.86 | 72.86 | | |
| Protein | Pea protein S86 Plus N (Rochette), pH=6.75 | | 10.80 | | | |
| | Pea protein Empro E 86 (Emslandgroup), pH: 7.19 | | | 10.80 | | |
| | Pea Protein Radipure E8001G (DKSH), pH=7,09 | | | | 10.80 | |
| | Pea Protein Radipure S8001B (DKSH), pH=7,04 | | | | | 10.80 |
| | Faba Bean Protein Concentrate (PT01) (Beneo) | | 1.20 | 1.20 | 1.20 | 1.20 |
| Oil | Rapeseed oil | | 11.50 | 11.50 | | |
| Thickener | Gellan | | | | | |
| | | High acyl gellan | 1.12 | 1.12 | 1.12 | 1.12 |
| | | Low acyl gellan | 0.28 | 0.28 | 0.28 | 0.28 |
| Acidity regulator | Sodium citrate | | 0.30 | 0.30 | 0.30 | 0.30 |
| Emulsifier | Lecithin | | 0.20 | 0.20 | 0.20 | 0.20 |
| Salt | Sodium chloride | | 0.80 | 0.80 | 0.80 | 0.80 |
| Coloring agent | Carrot concentrate | | 0.44 | 0.44 | 0.44 | 0.44 |
| Flavoring agent | Egg aroma | | 0.50 | 0.50 | 0.50 | 0.50 |
| Organic Acid | Acetic acid (10% (weight/weight)) | | 1.50 | 1.50 | 1.50 | 1.50 |
| | Total | | 100.00 | 100.00 | 100.00 | 100.00 |

### Manufacturing process

The manufacturing process was identical to the process of Example 1.

### Testing

Heating of product in frying pan until the product starts to boil is performed. Subsequently, visual inspection of the boiled/fried product by an expert grading the product with respect to the property at issue from 1 to 10 (1: not close to control example, 10: identical to control example) is performed.

### Results

**Table 5**

| Property | Example 1 | Reference example 2 | Reference example 3 | Reference example 4 | Control example (full chicken egg) |
|---|---|---|---|---|---|
| Viscosity | 8 | 2 | 7 | 7 | 10 |
| Emulsification | 8 | 6 | 3 | 3 | 10 |
| Texture/mouthfeel | 8 | 2 | 2 | 2 | 10 |

It was found that a pH of below 7 of the protein isolates improved especially the emulsification process, the texture and the mouth feel of the product. Products using protein isolates having a pH of above 7 often were too hard (Reference example 2) or gave a fatty mouth feel (Reference examples 3 and 4).

This is surprising since chicken eggs usually exhibit a pH above 7.

### EXAMPLE 3: EFFECT OF GELLAN ON EGG SUBSTITUTE

### Tested compositions:

**Table 6**

| | Ingredients | | Example 1 | Example 2 | Example 3 | Reference example 5 | Reference example 6 |
|---|---|---|---|---|---|---|---|
| | | | %(w/w) | %(w/w) | %(w/w) | %(w/w) | %(w/w) |
| (Total) water | Water | | 71,36 | 71,36 | 71,36 | 71,36 | 71,36 |
| Protein | Pea protein S86 Plus N (Rochette) | | 1280 | 12.00 | 12.00 | 12.00 | 12.00 |
| Oil | Rapeseed oil | | 11.50 | 11.50 | 11.50 | 11.50 | 11.50 |
| Thickener | Gellan | | 1.4 | | | | |
| | | high acyl gellan: | 4:1 | 5:1 | 3:1 | 2:1 | 7:1 |
| | | low acyl gelan | | | | | |
| Acidity regulator | Sodium citrate | | 0.30 | 0.30 | 0.30 | 0.30 | 0.30 |
| Emulsifier | Lecithin | | 0.20 | 0.20 | 0.20 | 0.20 | 0.20 |
| Salt | Sodium chloride | | 0.80 | 0.80 | 0.80 | 0.80 | 0.80 |
| Coloring agent | Carrot concentrate | | 0.44 | 0.44 | 0.44 | 0.44 | 0.44 |
| Flavoring agent | Egg aroma | | 0.50 | 0.50 | 0.50 | 0.50 | 0.50 |
| Organic Acid | Acetic acid (10% (weight/weight) ) | | 1.50 | 1.50 | 1.50 | 1.50 | 1.50 |
| | Total | | 100.00 | 100.00 | 100.00 | 100.00 | 100.00 |

### Manufacturing process:

The manufacturing process was identical to the process of Example 1.

### Testing

Heating of product in frying pan until product starts to boil. Subsequently visual inspection of the boiled/fried product by expert grading the product with respect to the property from 1 to 10 (1: not close to control example, 10: identical to control example).

### Results

**Table 7**

| Properties | Example 1 | Example 2 | Example 3 | Reference example 5 | Reference example 6 | Control example (full chicken egg) |
|---|---|---|---|---|---|---|
| Viscosity | 8 | 8 | 8 | 7 | 7 | 10 |
| Gelation | 8 | 8 | 8 | 6 | 5 | 10 |
| Texture/mouthfeel | 8 | 8 | 8 | 5 | 6 | 10 |

It was observed that a ratio of High acyl gellan: low acyl gellan in a ratio of 5:1 to 3:1 provided optimal results with respect to gelation and texture/mouth feel.

### EXAMPLE 4: EFFECT OF PH OF ON PROPERTIES OF EGG SUBSTITUTE PRODUCTS

### Tested compositions:

**Table 8**

| | Ingredients | | Example 1 | Example 2 | Example 3 |
|---|---|---|---|---|---|
| | | | %(w/w) | %(w/w) | %(w/w) |
| (Total) water | Water | | 70.16 | 71.36 | 72.36 |
| Protein | Pea protein S86 Plus N (Rochette), pH=6.75 | | 12.00 | 12.00 | 12.00 |
| Oil | Rapeseed oil | | 11.50 | 11.50 | 11.50 |
| Thickener | Gellan | | | | |
| | | High acyl gellan | 1.12 | 1.12 | 1.12 |
| | | Low acyl gellan | 0.28 | 0.28 | 0.28 |
| Acidity regulator | Sodium citrate | | 0.30 | 0.30 | 0.30 |
| Emulsifier | Lecithin | | 0.20 | 0.20 | 0.20 |
| Salt | Sodium chloride | | 0.80 | 0.80 | 0.80 |
| Coloring agent | Carrot concentrate | | 0.44 | 0.44 | 0.44 |
| Flavoring agent | Egg aroma | | 0.50 | 0.50 | 0.50 |
| Organic acid | Acetic acid (10 % (w/w)) | | 2.70 | 1.50 | 0.50 |
| | pH as determined | | 5.4 | 5.9 | 6.5 |
| | Total | | 100.00 | 100.00 | 100.00 |

### Manufacturing process:

| | |
|---|---|
| Mixing A | Dissolve acidity regulator in (30% of the total) water by stirring |
| Dissolve A | Disperse LA gellan in solution A by stirring |
| Mixing B | Dissolve protein in (70% of the total) water by stirring |
| Dissolve B | Disperse HA gellan in solution B by stirring |
| Mixing C | Add solution A to solution B under agitation |
| Emulsification | Add oil, acetic acid and lecithin under agitation, add salt under agitation |
| Heating | Heating emulsified product for 10 minutes at 75°C under agitation |
| Cooling | Cooling of product to 20°C |

### Testing

The evaluation was performed by heating of product in frying pan until the product starts to boil is performed. Subsequently, visual inspection of the boiled/fried product by a trained expert panel grading the product with respect to the property in the range from 1 to 10 (1: not close to control example, 10: identical to control example) was performed. Control was from a regular fresh chicken egg.

### Results

**Table 9**

| Property | Example 1 | Example 2 | Example 3 | Control |
|---|---|---|---|---|
| Viscosity | 5 | 7 | 7 | 10 |
| Emulsification | 8 | 7 | 5 | 10 |
| Texture | 6 | 8 | 7 | 10 |
| Pungent, acidic aroma | 2 | 6 | 9 | 10 |

It was found that pH < 5.5 adjusted with vinegar resulted in pungent, acidic aroma when frying and tasting the samples. However, increasing acidity led to better emulsification. Viscosity and texture also changed with pH, but remained acceptable.

It was also found that only a pH 5.4 in combination with frozen storage yielded a product with a sufficient shelf life. At pH 5.5-6.0 a preservative is required. After storing the obtained compositions at 4°C for a period of 5 days, only Example 1 with pH 5.4 was acceptable in terms of microbiological safety.

### EXAMPLE 5: EFFECT OF ADDING GELLAN AT DIFFERENT STEPS OF MANUFACTURING PROCESS

It was also observed (data not shown) that the respective gellans have to be first dissolved in separate aqueous solution respectively before they can be mixed together to provide the thickener system of the egg substitute product. Otherwise, the gelation process during frying of the egg substitute was not optimal.

Furthermore, it was observed that the gelation process is better when HA gellan is added to the aqueous protein solution and LA gellan to the aqueous acidity regulator solution.

| **Process step** | **Process step description** |
|---|---|
| | |
| Mixing A | Dissolve acidity regulator in (30% of the total) water by stirring |
| Dissolve A | Disperse LA gellan in solution A by stirring |
| Mixing B | Disperse HA gellan in (70% of the total) water by stirring |
| Dissolve B | Dissolve protein in B by stirring |
| Mixing C | Add solution A to solution B under agitation |
| Emulsification | Add oil and lecithin under agitation, add salt under agitation, adding organic acid |
| Heating | Heating emulsified product for 10 minutes at 75°C under agitation |
| Cooling | Cooling of product to 20°C |

It was also observed that the production process is shorter and the obtained texture further improved if the HA-gellan is added to water premixed with the protein composition (data not shown).

### EXAMPLE 6: EFFECT OF ADDING ORGANIC ACIDS TO REGULATE THE PH VALUE OF THE EGG SUBSTITUTE PRODUCT

### Example 6-1: Acetic acid / Citric acid ratio in the recipe

Acetic acid (10% aqueous solution, vinegar) and citric acid (10% aqueous solution) were tested by evaluating sensory and functional properties. Pure (10%) acetic acid was too sour and partially evaporated during frying, leading to a pungent aroma perception. The taste of pure (10%) citric acid was too sour and lemon-like for the specific scrambled eggs product, however no pungent aroma was developed upon frying. To limit the sour taste and mitigate the pungent aroma, various acetic acid / citric acid ratios were tested using the above-mentioned aqueous solutions. The following ratios of vinegar and citric acid were tested: 20/80, 30/70, 40/60, 50/50, 60/40 at 2.6 % (w/w) of the total egg substitute composition. Moreover, various sensory tests like hedonic tests, sourness intensity and pungent, acidic aroma during frying were tested with a sensory panel. In addition, gelling properties of the scrambled eggs were tested by frying the product on a pan at 120°C for 2 minutes.

The pH value and the overall sensory acceptance worked best with the acetic acid / citric acid ratio of 60/40, 50/50 and 40/60 (pH 5.4). Furthermore, the mildest sour taste, low acidic pungent aroma, and acceptable gelling properties were detected with 50/50 ratio.

**Table 10**

| | Example 1 | Example 2 | Example 3 | Example 4 | Example 5 | Natural egg |
|---|---|---|---|---|---|---|
| Water | 71.8 | | | | | |
| Proteins | 12.0 | | | | | |
| Rapeseed oil | 11.5 | | | | | |
| Gellan gum (HA) | 0.6 | | | | | |
| Gellan gum (LA) | 0.2 | | | | | |
| Trisodiumcitrate dihydrate | 0.3 | | | | | |
| Lecithin | 0.2 | | | | | |
| Salt | 0.1 | | | | | |
| Vanilla yellow | 0.2 | | | | | |
| Peach orange | 0.02 | | | | | |
| Flavor | 0.48 | | | | | |
| Organic acid mixture (10%): | 2.6 | | | | | |
| 10% (w/w) acetic acid / 10% (w/w) citric acid | 20/80 | 30/70 | 40/60 | 50/50 | 60/40 | |
| Total | 100.00 | | | | | |
| Sensory acceptance (sour taste and pungent acidic aroma) | 4 | 6 | 8 | 9 | 8 | 10 |

### Example 6-2: Acetic acid / Lactic acid mixtures

Using the recipe shown below, the mixture consisting of 1.3% lactic acid (20% aqueous solution) and 1.3% of vinegar (10% aqueous solution) gave satisfactory results at pH=5.4 with a slightly softer but still acceptable texture and somewhat sour aftertaste. The fried product was prepared using 150 g of the liquid vegan egg sample heated for 1.5 minutes in a 1-minute pre-heated pan at 140°C.

The values are given in % (weight/weight):

**Table 11**

| | | Example 1 | Example 2 | Example 3 | |
|---|---|---|---|---|---|
| Water | 71.83 | | | | |
| Proteins | 12.0 | | | | |
| Rapeseed oil | 11.5 | | | | |
| Gellan gum (HA) | 0.6 | | | | |
| Gellan gum (LA) | 0.2 | | | | |
| Trisodiumcitrate dihydrate | 0.3 | | | | |
| Lecithin | 0.2 | | | | |
| Salt | 0.1 | | | | |
| Vanilla yellow | 0.2 | | | | |
| Peach orange | 0.02 | | | | |
| Flavor | 0.45 | | | | |
| Organic acid mixture: | 2.6 | | | | |
| 10% (w/w) acetic acid / 20% (w/w) lactic acid | | 70/30 | 50/50 | 30/70 | |
| Total | 100.00 | | | | |

| Property | | Example 1 | Example 2 | Example 3 | Control |
|---|---|---|---|---|---|
| Viscosity | | 6 | 7 | n.d. | 10 |
| Emulsification | | 8 | 8 | n.d. | 10 |
| Texture | | 7 | 6 | n.d. | 10 |
| Pungent, acidic aroma | | 8 | 9 | n.d. | 10 |

| | | | | | |
|---|---|---|---|---|---|
| n.d. not determined | | | | | |

### EXAMPLE 7: EFFECT OF ADDING ADDITIONAL EMULSIFIERS TO IMPROVE THE EMULSION STABILITY OF THE EGG REPLACER

### Basic recipe (in %): Changes mentioned in the table:

| | |
|---|---|
| Water | 72.3 |
| Proteins | 12.0 |
| Rapeseed oil | 11.5 |
| Gellan gum (HA) | 0.6 |
| Gellan gum (LA) | 0.2 |
| Trisodiumcitrate dihydrate | 0.3 |
| Lecithin | 0.2 |
| Salt | 0.1 |
| Vanilla yellow | 0.2 |
| Peach orange | 0.02 |
| Flavor | 0.98 |
| Vinegar (10% aqueous solution) | 1.6 |
| Total | 100.00 |

### Preparation:

- Sample 1: LA-Gellan and Na-Citrate dissolved in water (30% of total volume)
- Sample 2: Proteins, colorants and lecithin dispersed in water (70% of total volume)
- HA-Gellan added to Sample 2
- Mixing of both samples to obtain Sample 3
- Adding slowly edible oil to Sample 3
- Adding salt, flavor and vinegar
- Heated to 70°C
- Cooling and freezing

Based on the recipe and preparation procedure, an additional emulsifier was added as described in the table. The sample was characterized after thawing (emulsion, gelation, and off-flavor).

The following emulsifiers were tested in combination with lecithin:
→ Avebe Paselli MC 150 - Modified starch
→ Nutrava TM Citrus Fiber Peak - Citrus fiber
→ Myvatex - Mono- and Diglycerides
→ MCE-15 - Methylcellulose

| | **Methylcellulose** | **Methylcellulose** | **Mono/Diglycerides** | **Modified starch** | **Citrus fiber** | **Reference** |
|---|---|---|---|---|---|---|
| Ingredient added | MCE-15 (0.2%) | MCE-15 (0.2%) | Myvatex (0.5%) | Avebe Paselli MC 150 (0.25%) | Nutrava TM Citrus Fiber Peak (0.25%) | - |
| Preparation modus | Dry mixing (with proteins, lecithin, colorants) | Dispersed in edible oil | Dry mixing (with proteins, lecithin, colorants) | Dispersed in edible oil | Dispersed in water (then adding protein, lecithin, colorants) | See above |
| Emulsion, after thawing | 9 | 8 Small water phase | 8 Small oil droplets | 6 Phase separation | 7 Small oil droplets | 5 |
| Gelation / texture, after baking | 10 | 9 Little softer | 8 | 7 | 9 Little more viscous | 10 |
| Off-Flavor | 2 Little powdery | 2 Little powdery | 2 Sweet taste, little powdery | 3 Powdery mouthfeel | 3 Some sourness, citrus note | 1 |

The samples were compared with the reference evaluating emulsion stability, gelation/texture and off-flavor, using values for the reference set at 5, 10, and 1, respectively. The results show that some of the additional emulsifiers may improve emulsion stability without compromising for gelation/texture and off-flavor. Overall, methylcellulose has resulted in best results.

## Claims

1. Egg substitute composition comprising
a. 8 - 16 % (w/w) of a protein isolate composition comprising pea protein isolate,
b. 8 - 16 % (w/w) of vegetable oil,
c. 0.5 - 2 % (w/w) of a thickener composition,
d. 0.1 - 1 % (w/w) of emulsifier,
e. 0.01-1 % (w/w) of acidity regulator,
f. at least one organic acid, and
g. the remainder being water,
wherein the pH of the composition is 5.0 - 7.0.

2. The egg substitute composition according to claim 1, further comprising one or more colorants or/and one or more flavoring agents or/and salt.

3. The egg substitute composition according to claims 1 or 2, wherein the egg substitute composition further comprises faba bean protein isolate.

4. The egg substitute composition according to any of the preceding claims, wherein a) the pH of the egg substitute composition is 5.2 to 5.6, or 5.2 to 5.5, 5.3 to 5.4 or b) the egg substitute composition exhibits an pH of 5.7 to 7.0 and comprises a preservative, wherein optionally the preservative is selected from propionic acid or its salt, sorbic acid or its salt, benzoic acid or its salt, levulinic acid or its salt, nisin, lysozyme, or a combination thereof.

5. The egg substitute composition according to any of the preceding claims, wherein the thickener composition comprises at least two different thickeners, wherein the at least two different thickeners are capable of providing at least two different viscosities at room temperature in a solution when tested under the same conditions.

6. The egg substitute composition according to claim 5, wherein the at least two different thickeners are high acyl gellan and low acyl gellan.

7. The egg substitute composition according to any of the preceding claims, wherein egg substitute composition comprises the pea protein isolate in an amount of 9-15 % (w/w), 10 - 14 % (w/w), or 11 - 13 % (w/w).

8. The egg substitute composition according to any of the preceding claims, wherein the emulsifier is lecithin or a combination of lecithin with mono- and diglycerides.

9. The egg substitute composition according to any of the preceding claims, wherein the acidity regulator is an organic salt, preferentially sodium citrate.

10. The egg substitute composition according to any of the preceding claims, wherein the egg substitute composition comprises at least two organic acids, wherein optionally the organic acids are acetic acid and an organic acid having 3-6 carbons, wherein optionally the organic acids are acetic and citric acid.

11. A food product comprising the egg substitute composition according to any of the preceding claims.

12. Method for providing an egg substitute composition comprising the steps in the following order:
a. Dissolve an acidity regulator in water to provide a solution A
b. Dissolve a first thickener in solution A
c. Dissolve a second thickener in water to provide solution B
d. Dissolve a protein isolate composition in solution B
e. Mix solution A with solution B to provide a solution C
f. Dissolve a composition comprising vegetable oil and emulsifier in solution C
g. Dissolve salt in and add an organic acid to solution C
h. Heating solution C obtained in step g. to a temperature of 70°C - 75 °C and then by cooling the temperature of solution C to a desired temperature providing the egg substitute composition, the obtained egg substitute composition exhibiting a pH of 5.0 - 7.0.

13. The method of claim 12, wherein the second thickener is capable of providing a higher viscosity in a solution than the first thickener at room temperature when tested under the same conditions.

14. The method of any of claims 12 or 13, further comprising a step f'. between step f. and step g., said step f'. comprising: adding one or more colorants or/and one or more flavoring agents.

15. The method of any of claims 12-14, wherein the egg substitute composition is the composition of any of claims 1-11.
